# EUROPEAN PATENT SPECIFICATION

(11) **EP 1 179 667 B1**
(45) Date of publication and mention of the grant of the patent: **13.10.2004**
(21) Application number: 01118159.1
(22) Date of filing: 26.07.2001
(51) Int. Cl.: F02D 41/02, F02M 25/07, F01N 3/20, F01N 11/00

(54) **Exhaust gas purifying system for engine**
Abgasreinigungssystem einer Brennkraftmaschine
Système de purification de gaz d'échappement pour un moteur

(30) Priority: 07.08.2000 JP 2000237958
(43) Date of publication of application: 13.02.2002
(73) Proprietor: MAZDA MOTOR CORPORATION, Aki-gun, Hiroshima-ken (JP)
(72) Inventor: Kataoka, Matoshi, Aki-gun, Hiroshima (JP); Hayashibara, Hiroshi, Aki-gun, Hiroshima (JP); Watanabe, Tomomi, Aki-gun, Hiroshima (JP)
(74) Representative: Zinnecker, Armin, Dipl.-Ing.

(56) References cited:
- EP-A- 0 498 598
- EP-A- 0 901 809
- EP-A- 0 911 499
- US-A- 5 331 809

## Description

The present invention relates to an exhaust gas purifying system for an internal combustion engine.

Oxides of nitrogen (NOx) from a diesel engine or a gasoline engine are reduced by a catalytic disposed in an exhaust line of the engine for purification of an exhaust gas. Typically, the catalyst has such a property that a NOx conversion efficiency increases with a rise in catalyst temperature to a specific temperature at which the catalyst shows a peak NOx conversion efficiency (which is hereafter referred to as a peak temperature) and decreases with a drop in catalyst temperature from the peak temperature. It is known in connection with this type of catalyst that the NOx reduction efficiently progresses when the exhaust gas contains an increased amount of reducing substance. However, when supplying a large amount of reducing substance into the exhaust gas while the catalyst is at a temperature higher than the peak temperature, the catalyst is exposed to a great rise in temperature due to heat of oxidation reaction, so as to decrease the NOx conversion efficiency far from enhancing it.

In order to eliminate a drop in NOx conversion efficiency that occurs when supplying a large amount of reducing substance into the exhaust gas while the catalyst is at a temperature higher than the peak temperature, it has been proposed in, for example, Japanese Unexamined Patent Publication 9 - 317524 to supply a reducing substance into a NOx purifying catalyst through post-fuel injection that delivers a small amount of fuel into a combustion chamber after main fuel injection that delivers a predominant amount of fuel into the combustion chamber at a point of time near a top dead center in a compression stroke. In this instance, the amount of fuel that is delivered through the post fuel injection is increased while the catalyst is at a temperature lower than the peak temperature or decreased while the catalyst is at a temperature higher than the peak temperature. That is, the technique is such as to prevent the catalyst from causing an excessive rise in temperature due to the post fuel injection by differing the amount of fuel for the post fuel injection according to temperature zones in which the catalyst temperature is.

It is advantageous to restrict a rise in temperature of the catalyst by controlling the amount of reducing substance that is supplied into the catalyst through the post fuel injection. However, it is difficult to determine what amount of reducing substance is practically preferred for the catalyst. Specifically, when supplying a somewhat small amount of reducing substance while the catalyst is in a temperature zone on a higher side from the peak temperature, the catalyst is, on one hand, prevented from an excessive rise in temperature and, on the other hand, difficult to enjoy sufficient improvement in NOx conversion efficiency resulting from the supply of reducing substance. On the other hand, when supplying a somewhat large amount of reducing substance while the catalyst is in the temperature zone on the higher side from the peak temperature, the catalyst, on one hand, provides a rise in NOx conversion efficiency immediately after supply of reducing substance and, on the other hand, encounters a drop in NOx conversion efficiency due to a sharp temperature rise.

The present invention has its object to provide an exhaust gas purifying system which solves the problems of the prior art exhaust gas purifying systems.

The present invention has been made focusing on the empirical knowledge that a NOx purifying catalyst cause a rise in temperature differently according to an increasing rate at which reducing substance supply is increased through the post fuel injection and that the NOx purifying catalyst has temperature dependency variable according to an increasing rate at which the reducing substance supply is increased through the post fuel injection. That is, the exhaust gas purifying system for an internal combustion engine is adapted so as to estimate a change in NOx conversion efficiency due to an increase in the amount of reducing substance and then determine an increasing rate of reducing substance supply.

According to the present invention, the exhaust gas purifying system is provided with a NOx purifying catalyst disposed in an exhaust line of the engine which reduces and purifies NOx in an exhaust gas and has a catalytic characteristic such as to increase a NOx conversion efficiency with a rise in catalyst temperature to a specific temperature at which the NOx purifying catalyst shows a peak NOx conversion efficiency and to decrease the NOx conversion efficiency with a further rise in catalyst temperature beyond the specific temperature, and reducing substance increasing means for increasing an amount of reducing substance in the exhaust gas that is supplied to the NOx purifying catalyst through post fuel injection. The exhaust gas purifying system is characterized in that control means comprises estimating means which estimates a change in a value relating to NOx conversive power of the NOx purifying catalyst at an occurrence of an increase in the amount of reducing substance provided by the reducing substance increasing means when the NOx purifying catalyst is at a temperature beyond the specific temperature and determining means which operates an increasing rate of reducing substance supply on the basis of an estimated change in the value relating to NOx conversive power. The reducing substance increasing means increases the amount of reducing substance in the exhaust gas at the increasing rate of reducing substance supply.

Since the exhaust gas purifying system is provided with the estimating means for estimating a change in the value relating to NOx conversive power of the NOx purifying catalyst when the amount of reducing substance is increased, an NOx conversion efficiency that is reached in a specified time for which the amount of reducing substance is continuously risen or a NOx conversion efficiency that is reached at a point of time after a lapse of the specified time is found. Therefore, an appropriate increasing rate of reducing substance supply can be set according to the NOx conversion efficiency in the specified time or the NOx conversive power after a lapse of the specified time.

The exhaust gas purifying system may be modified such that the estimating means estimates a change in said value relating to NOx conversive power of the NOx purifying catalyst that is caused before a lapse of he specified time from an occurrence of the increase in the amount of reducing substance, and the determining means operates a NOx conversion efficiency in the specified time on the basis of an estimated change in the value relating to NOx conversive power and determines an increasing rate of reducing substance supply on the basis of the NOx conversion efficiency. This exhaust gas purifying system is advantageous in causing a rise in NOx conversion efficiency by means of an increase in reducing substance supply.

The exhaust gas purifying system may further be modified such that the estimating means estimates changes in the value relating to NOx conversive power one for each of a plurality of the increasing rates of reducing substance, and the determining means determines a NOx conversion efficiency in the specified time for each increasing rate of reducing substance supply on the basis of an estimated change in the value relating to NOx conversive power and selects one of the increasing rates of reducing substance that makes the NOx conversion efficiency larger, for example, the largest or near largest, as the increasing rate of reducing substance supply at which the reducing substance increasing means increases the amount of reducing substance supply. This exhaust gas purifying system can set an increasing rate of reducing substance supply o as to provide the NOx conversion efficiency as large as possible.

It is preferable to employ a temperature of the NOx purifying catalyst for the value relating to NOx conversve power in the viewpoint of a precise estimate of NOx conversive power of the NOx purifying catalyst. In the case where a temperature of the NOx purifying catalyst is employed for the value relating to NOx conversve power, the exhaust gas purifying system can be modified such that the estimating means has data of how a rising rate of temperature of the NOx purifying catalyst varies according to the increasing rate of reducing substance supply and estimates a rise in catalyst temperature of the NOx purifying catalyst in the specified time for each increasing rate of reducing substance on the basis of the data, and the determining means has data of how the NOx conversive power of the NOx purifying catalyst varies according to the increasing rate of reducing substance supply and comprises operating means for operating the NOx conversion efficiency in the specified time for each the increasing rate of reducing substance supply upon an occurrence of the estimated rise in catalyst temperature of the NOx purifying catalyst and selecting means for selecting one of the increasing rates of reducing substance that provides a largest or near largest value of NOx conversion efficiency as the increasing rate of reducing substance supply at which the reducing substance increasing means increases the amount of reducing substance in the exhaust gas.

The reducing substance increasing means may be such that, in the case where a fuel injector is installed so as to splay fuel directly into a combustion chamber, HC as a reducing substance is increased in amount in an exhaust gas by implementing post fuel injection in either an expansion stroke or exhaust stroke after implementation of main fuel injection through which the fuel injector sprays a predominant amount of fuel necessary for the engine to provide a demanded output torque. Otherwise, the reducing substance increasing means may be such that, in the case where a predominant amount of fuel necessary for the engine to provide a demanded output torque is divided into a plurality of parts which are splayed through split fuel injection at regular intervals of 50µs to 1000 µs at a point of time near a top dead center of a compression stroke, HC as a reducing substance is increased in amount in an exhaust gas by changing a pattern of split fuel injection so as either to increase the number of times of the split fuel injection or to prolong the regular intervals. Alternatively, the reducing substance can be increased in amount in an exhaust gas by retarding a timing of fuel injection for providing a demanded engine output torque, for example approximately 10° to 20° retardation in cam angle. In this case, pilot fuel injection may be implemented before the main fuel injection. This pilot fuel injection is such as to deliver fuel of an amount of 1/20 to 1/10 as small as the amount of fuel necessary to provide a demanded engine output torque immediately before the main fuel injection, more specifically at a point of time before a top dead center of a compression stroke. The implementation of pilot fuel injection produces a pilot flame prior to the main fuel injection that results from a pressure rise in the combustion chamber due to elevation of a piston and causes a significant rise in temperature in the combustion chamber. Therefore, even if putting the main fuel injection off, for example, beyond the top dead center of a compression stroke, satisfactory diffusion combustion takes place without accompanying aggravation of firing fuel that is delivered through the main fuel injection. For gasoline engines, the reducing substance increasing means may be such that HC is increased in amount in an exhaust gas by retarding a timing of fuel ignition.

In place of changing a pattern of split fuel injection as described above, the amount of reducing substance can be increased by supplying HC, for example by supplying alight oil, into an exhaust gas passage upstream from an upstream catalyst.

As described above, according to the present invention, the exhaust gas purifying system having a NOx purifying catalyst disposed in an exhaust line which operates to increase a NOx conversion efficiency with a rise in catalyst temperature to a specific temperature at which the NOx purifying catalyst shows a peak NOx conversion efficiency and to decrease the NOx conversion efficiency with a further rise in catalyst temperature beyond the specific temperature estimates a change in a value relating to NOx conversive power of the NOx purifying catalyst at an occurrence of an increase in the amount of reducing substance that is provided by the reducing substance increasing means while the NOx purifying catalyst is at a temperature beyond the specific temperature and determines an increasing rate of reducing substance supply on the basis of an estimated change in the value relating to NOx conversive power. The exhaust gas purifying system can provide an increasing rate of reducing substance supply favorable for NOx purification in expectation of a drop in NOx conversion power due to a rise in catalyst temperature.

The above and other objects and features will be more clearly understood upon reading the following description in conjunction with the accompanying drawings, in which like elements in different figures thereof are identified by the same reference numeral and, wherein:
Figure 1 is a general illustration of a diesel engine equipped with an exhaust gas purifying system of the present invention;
Figure 2 is a schematic graphical illustration showing characteristic curves of catalyst conversion efficiency for HC and NOx with respective to catalyst temperature;
Figure 3 is a block diagram showing a functional structure of means for determining the amount of post fuel injection;
Figure 4 is a graphical illustration showing characteristic curves of temperature rising rate of a NOx purifying catalyst with respect to HC-NOx* ratio;
Figure 5 is a graphical illustration showing characteristic curves of NOx conversion efficiency with respect to catalyst temperature for various HC-NOx* ratios;
Figure 6 is a graphical illustration showing a change in HC content of an exhaust gas with time for various HC-NOx* ratios;
Figure 7 is a graphical illustration showing a change in NOx conversion efficiency with time for various HC-NOx* ratios;
Figure 8 is a graphical illustration showing a mean NOx conversion efficiency for various HC-NOx* ratios;
Figure 9 7 is a graphical illustration showing a change in NOx conversion efficiency with time for various HC-NOx* ratios; and
Figure 10 is a flow chart illustrating a sequence routine of fuel injection control.

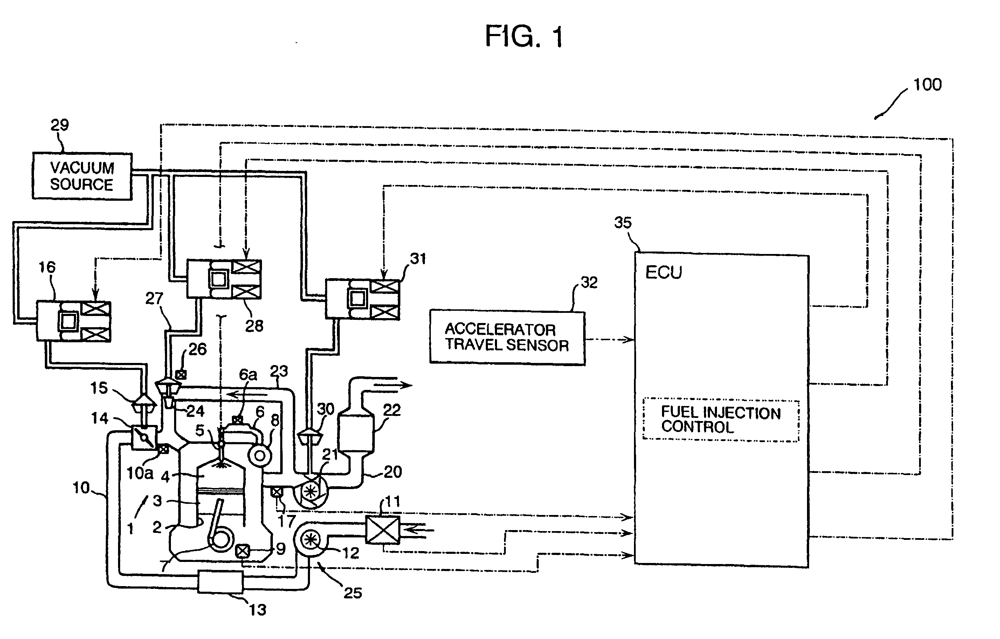

Referring to the drawings in detail, and, in particular, to Figure 1 which shows the overall structure of a diesel engine control system 100 according to an embodiment of the present invention, denoted by a reference numeral 1 is a multiple cylinder diesel engine carried in a vehicle. The diesel engine 1 has multiple cylinders 2 (only one of which is shown in the figure), in which pistons 3 are received to slide. A combustion chamber 4 is formed inside each cylinder 2 by the piston 3. Also, a fuel injector (fuel injection valve) 5 is located at the center of a top of the combustion chamber 4 with its nozzle faced to the combustion chamber 4. The fuel injector 5 is opened and closed at a predetermined injection timing to deliver fuel directly into the combustion chamber 4. Each fuel injector 5 mentioned above is connected to a common rail (pressure accumulating chamber) 6 for accumulating high-pressure fuel therein. The common rail 6 is provided with a pressure sensor 6a operative to detect an internal fuel pressure as a common rail pressure and a high-pressure supply pump 8 which is driven by a crankshaft 7 of the diesel engine 1. The high-pressure supply pump 8 regulates an internal fuel pressure in the inside of the common rail 6, which is detected as a common rail pressure by the pressure sensor 6a. A crank angle sensor 9, which may take the form of electromagnetic pick-up well known to those in the art, is provided to detect a rotational angle of the crankshaft 7. The crank angle sensor 9 comprises a plate with peripheral projections for detection (not shown) secured to one end of the crankshaft 7 and an electromagnetic pickup (not shown) arranged correspondingly in position to the outer periphery of the plate. The electromagnetic pickup outputs a pulse signal in response to one of the peripheral projections arranged at regular angular intervals.

The diesel engine 1 at one of opposite sides (the left side as viewed in the figure) has an intake passage 10 through which intake air is supplied into the combustion chamber 4 of the engine 1 via an air cleaner (not shown). The intake passage 10 at a downstream end is branched off through a surge tank (not shown) and connected respectively to the combustion chambers 4 of the cylinders 2 through intake ports. A charging pressure sensor 10a is provided in order to detect a supercharging pressure in the inside of the surge tank that is supplied to the cylinders 2. The intake passage 10 is further provided, in order from the upstream end to the downstream end, with a hot film type of air flow sensor 11 operative to detect an amount of fresh intake air which is introduced into the intake passage 10, a blower 12 which is driven by a turbine 21 of a turbo-supercharger 25 (which is hereafter referred to as a turbocharger for simplicity) to compress intake air, an intercooler 13 operative to cool down the intake air that is compressed by this blower 12, and an intake throttle valve 14 as means operative to reduce the amount of fresh intake air by reducing an cross section of the intake passage 10. The intake throttle valve 14 is of a type comprising a butterfly valve which has a notch so as to admit intake air even while it is fully closed. Similar to an exhaust gas recirculation (EGR) valve 24 which will be described later, the intake throttle valve 14 is controlled to change its opening by controlling the level of negative pressure acting on a diaphragm 15 by an electromagnetic valve 16 for negative pressure control.

Denoted by a reference numeral 20 is an exhaust passage into which exhaust gas is discharged from the combustion chamber 4 of each cylinder 2. The exhaust passage 20 at the upstream end is branched off and connected to the combustion chambers 4 of the cylinders 2 through exhaust ports. The exhaust passage 20 is provided, in order from the upstream end to the downstream end, with a linear oxygen (O₂) sensor (which is hereafter referred to as a linear O₂ sensor) 17 operative to detect the oxygen concentration of exhaust gas, the turbine 21 which is driven by an exhaust gas flow and a NOx purifying catalyst 22 operative to lower the emission amounts of HC, CO and NOx in exhaust gases so as thereby to purify the exhaust gas. The NOx purifying catalyst 22 is provided with a temperature sensor 18 operative to detect a temperature of the NOx purifying catalyst 22.

The NOx purifying catalyst 22 has a catalyst layer formed on wall surfaces of a number of pours or holes of a cordierite honeycomb substrate (not shown) which are directed in a direction in which an exhaust gas flows and has a characteristic. The catalyst layer is formed by carrying a catalyst powder on the substrate with a binder. The catalyst powder is provided by spraying particles of a novel metal (catalytic metal) such as platinum (Pt) on particles of zeolite and drying them.

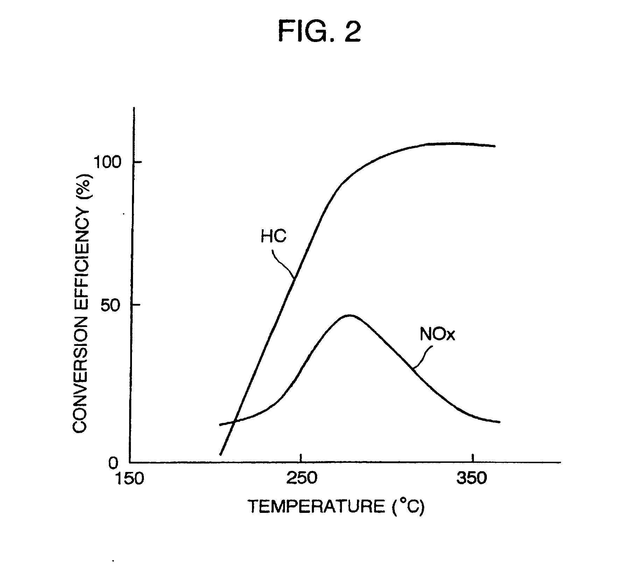

Figure 2 schematically shows a temperature characteristic of the NOx purifying catalyst 22 in connection with NOx conversion efficiency and HC conversion efficiency. As shown in Figure 2, the NOx conversion efficiency rises as the catalyst temperature rises to a specific temperature between approximately 250° C and approximately 300° C at which the NOx conversion efficiency has a peak (which is hereafter referred to a peak temperature) and drops as the catalyst temperature rises further from specific temperature. The HC conversion efficiency rises as the catalyst temperature rises to approximately 300° C and remains constant near 100% for catalyst temperatures higher than 300° C.

The exhaust passage 20 at the upstream from the turbine 21 branches off into an exhaust gas recirculation (EGR) passage 23 through which an exhaust gas is partly recirculated into the intake stream. The exhaust gas recirculation passage 23 at the downstream end is connected to the intake passage 10 downstream from the intake throttle valve 14. The exhaust gas recirculation passage 23 at a point close to the downstream end is provided with the exhaust gas recirculation (EGR) valve 24 which is of a type which is driven with negative pressure to open so s to admit partly an exhaust gas from the exhaust passage 20 into the intake passage 10. A vacuum passage 27 is connected between a vacuum chamber of the exhaust gas recirculation (EGR) valve 24 and a vacuum pump (vacuum pressure source) 29 through an electromagnetic valve 28 which controls vacuum pressure. The vacuum pressure in the vacuuming chamber, with which the exhaust gas recirculation (EGR) valve 24 is driven, is controlled by energizing the electromagnetic valve 28 with a control signal (electric current) from an engine control unit (ECU) 35 which will be described later to open or shut the vacuum passage 27. By means of this, the opening of exhaust gas recirculation passage 23 is linearly varied with the regulated vacuum pressure. Similar to the exhaust gas recirculation valve 24, the turbocharger 25, which is of a type of variable geometric turbocharger (VGT), is provided with a diaphragm 30. The cross-sectional area of the exhaust gas passage 20 is adjusted by regulating vacuum pressure acting on the diaphragm 30 by an electromagnetic valve 31.

The engine control unit 35 receives signals from the pressure sensor 6a, the crank angle sensor 9, the charging pressure sensor 10a, the air flow sensor 11, the linear O₂ sensor 17, the temperature sensor 18, a lift sensor 26 operative to detect an opening of the exhaust gas recirculation valve 24, an accelerator travel sensor 32 operative to detect an accelerator opening and a temperature sensor (not shown) operative to detect a temperature of engine cooling water, respectively. The engine control unit 35 sends control signals to the fuel injector 5, the high-pressure supply pump 8, the intake throttle valve 14, the exhaust gas recirculation valve 24 and the turbocharger 25, respectively, so as to control them. While the engine control unit (ECU) 35 controls the fuel injector 5 so that the fuel injector 5 delivers a controlled amount of fuel at a controlled injection timing in accordance with engine operating conditions, it controls the high-pressure supply pump 8 so that the high-pressure supply pump 8 regulates the common rail pressure, i.e. the fuel injection pressure. In addition, the engine control unit (ECU) 35 controls the exhaust gas recirculation (EGR) valve 24 so as to regulate the amount of exhaust gas that is recirculated, i.e. the amount of intake air, and the turbocharger (VGT) 25.

In order to perform fuel injection control, the engine control unit (ECU) 35 has control maps, namely a torque control map that prescribes an optimum target engine torque which is empirically determined in accordance with changes in engine speed and accelerator opening (i.e. engine load) and a fuel injection control map that prescribes an optimum amount of fuel injection ***Qb*** which is empirically determined in accordance with the target engine torque and changes in engine speed and intake air amount. These control maps are is electronically stored in a memory. Ordinarily, the target engine torque is determined on the basis of an accelerator opening detected by the accelerator travel sensor 32 and an rotational speed of engine detected by the crank angle sensor 9. The amount of fuel injection ***Qb*** is determined on the basis of the target engine torque, the rotational speed of engine and an amount of fresh intake air that is detected by the air flow sensor 11. An excitation time for which the fuel injector 5 remains open is determined on the basis of the amount of fuel injection ***Qb*** and a common rail pressure detected by the pressure sensor 6a. In this instance, the amount of fuel injection ***Qb*** may be corrected according to a temperature of engine cooling water and the atmospheric pressure.

Through the basic main fuel injection control, an amount of fuel meeting the target engine torque (an output torque demanded fort he engine 1) is delivered so as thereby to provide quite a lean mean air-fuel ratio (A/F ≧ 18; oxygen content ≧ 4%) in the combustion chamber 4 of the engine 1. Under ordinary engine operating conditions (while the accelerator opening remains small), the engine control unit (ECU) 35 implements post fuel injection through which a small amount of fuel is delivered in an expansion stroke after the main fuel injection or in an exhaust stroke according to catalyst temperatures in order to supply a reducing component to the NOx purifying catalyst 22 so as thereby to hasten reduction and purification of NOx. In this sense, the fuel injector 5 functions as reducing substance increasing means. The post fuel injection is not implemented once every main fuel injection but is appropriately thinned out. That is, the post fuel injection is implemented once every a plurality of main fuel injection. For example, in the case where the firing order in a four cylinder engine (having cylinders A, B, C and D) is A, B, C, D, and the post fuel injection is implemented once every five main fuel injection, when the post fuel injection is implemented for the first time after the first main fuel injection for the cylinder A, the post fuel injection is not implemented after the first main fuel injection for the cylinders B, C and D and after the second main fuel injection for the cylinder A. The second post fuel injection is implemented after the second main fuel injection for the cylinder B. In this manner, the post fuel injection is thinned out.

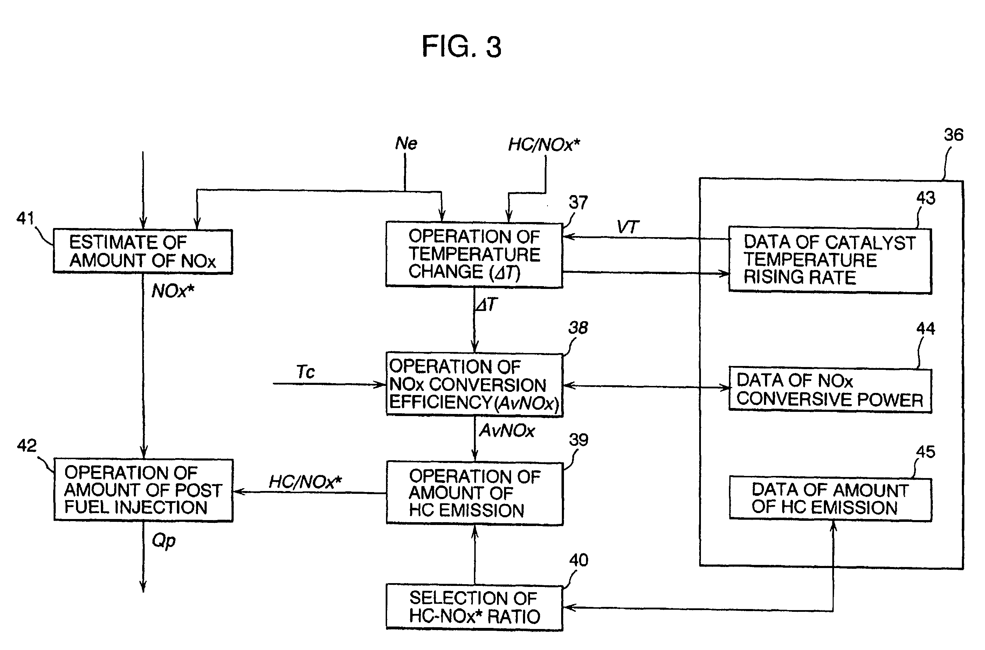

Explaining plainly, the present invention is characterized by estimating a change in value relating to NOx conversive power of the NOx purifying catalyst with time when the post fuel injection is implemented and setting an appropriate amount of post fuel injection on the basis of the estimated change. The engine control unit (ECU) 35 has post fuel injection amount setting means such as shown by a functional block diagram in Figure 3.

Referring to Figure 3, the post fuel injection amount setting means comprises various functional blocks 36 - 42 which are referred to as means. Namely, data memory means 36 is provided to store data necessary to operate the amount of post fuel injection. Temperature change operation means 37 operates a change in temperature (a temperature change) Δ***T*** of the NOx purifying catalyst 22 when the reducing substance is increased through the post fuel injection for specified time **Δ*t***. Conversion efficiency operation means 38 operates a NOx conversion efficiency in the specified time Δ***t*** on the basis of the temperature change Δ***T***. HC emission operation means 39 operates the amount of HC emission into the atmosphere in the specified time Δ***t***. HC/NOx* selection means 40 selects an optimum HC-NOx* ratio (***HC*/*NOx****) on the basis of NOx conversion efficiency and amount of HC emission. NOx* amount estimate means 41 estimates the amount of NOx generation (***NOx****) on the basis of engine operating condition. Post fuel injection amount operation means 42 determines the increasing rate of reducing substance supply, namely the amount o post fuel injection ***Qp****,* on the basis of the selected HC-NOx* ratio and the amount of NOx generation ***NOx**.** The term "HC-NOx* ratio ***HC*/*NOx**** as used herein means and refers to the ratio of the amount of reducing substance supply ***HC*** relative to the amount of NOx generation ***NOx**** The term "amount of reducing substance supply ***HC*** *" is* the amount of reducing substance that is supplied to the NOx purifying catalyst 22 as a result of main and post fuel injection. The specified time *Δ****t*** is used in order to predict an influence of increase in the amount of reducing substance due to post fuel injection on the temperature change of the NOx purifying catalyst 22. In light of this, the specified time *Δ****t*** may be between 30 seconds and 60 seconds in which a temperature change appears in the NOx purifying catalyst 22. Since the time that passes before an appearance of temperature change depends upon the amount of exhaust gas, the specified time Δ***t*** may be set shorter with an increase in engine speed.

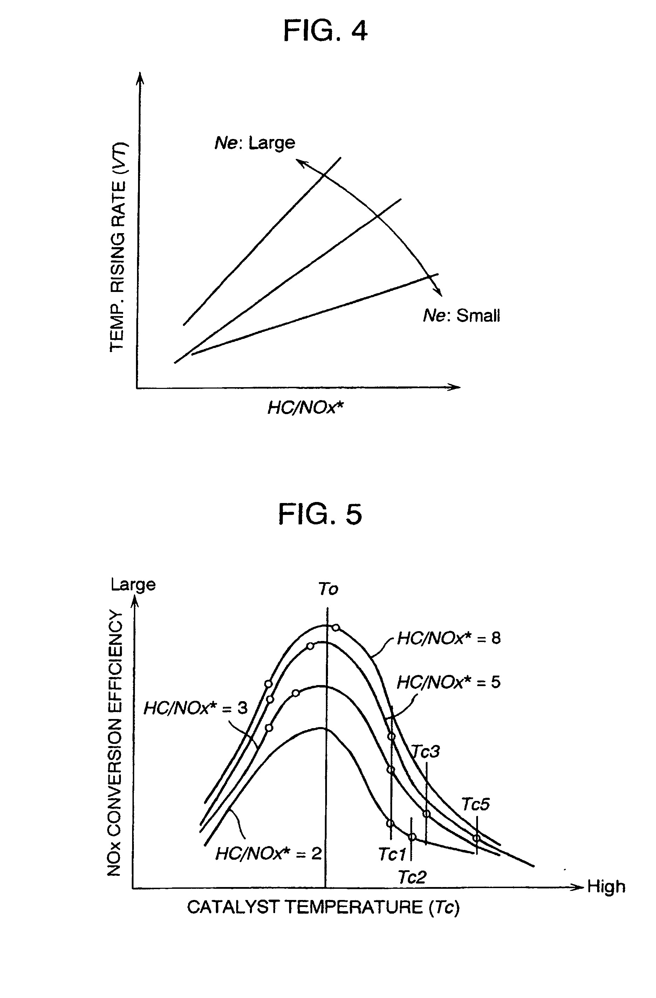

Specifiedally, the data memory means 36 comprises data memories 43, 44 and 45 for storage of data of temperature rising rate of the NOx purifying catalyst 22, data of NOx conversion efficiency of the NOx purifying catalyst 22 and data of the amount of HC emission, respectively, such as shown in Figures 5, 6 and7, respectively.

Figure 4 shows the relationship between temperature rising rate ***VT*** and HC-NOx* ratio ***HC*/*NOx**** which indicates how the temperature rising rate ***TV*** changes with respect to a change in HC-NOx* ratio ***HC*/*NOx**.** This relationship varies according to engine speed and is experimentally determined for various engine speeds ***Ne****.*

Figure 5 shows the relationship between NOx conversion efficiency and catalyst temperature which indicates how the NOx conversion efficiency changes with a change in catalyst temperature ***Tc***. This relationship varies according to HC-NOx* ratio and is experimentally determined for various HC-NOx* ratios.

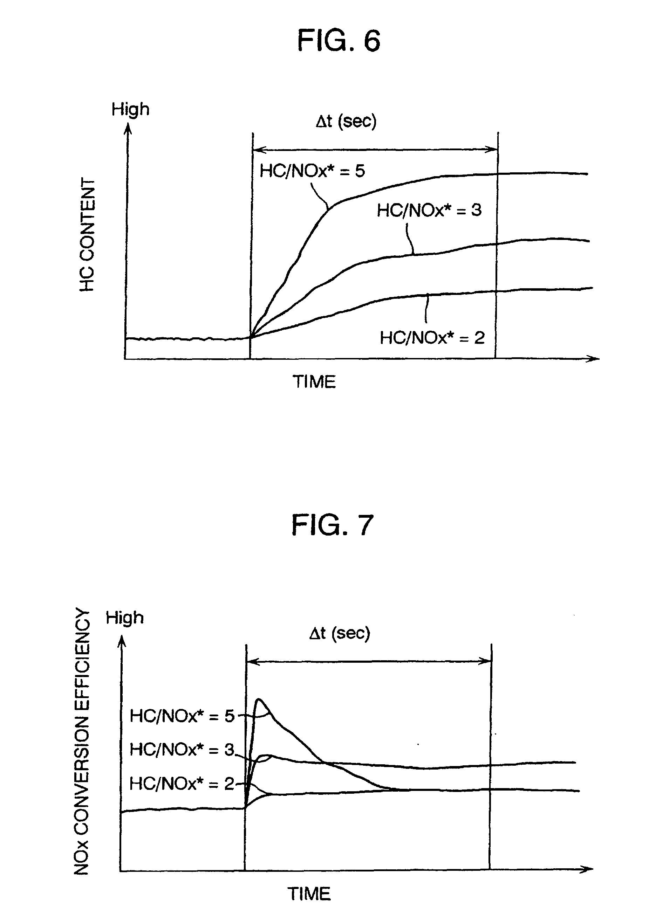

Figure 6 shows the relationship between HC content and time which indicates how the HC content of an exhaust gas passing through the NOx purifying catalyst 22 changes as time passes This relationship varies according to HC-NOx* ratio and is experimentally determined for various HC-NOx* ratios.

The temperature change operation means 37 reads in temperature rising rates VT with respect to a plurality of given HC-NOx* ratios according to a current engine speed ***Ne*** from the data memory 43 and determines a change in catalyst temperature (a catalyst temperature change) Δ***T*** for each HC-NOx* ratio by multiplying the temperature rising rate ***VT*** by the specified time Δ***t***. The temperature change operation means 37 and data memory 43 form functional means for estimating a change in NOx conversive power of the NOx purifying catalyst 22.

The conversion efficiency operation means 38 reads in a change in NOx conversion efficiency for each HC-NOx* ratio for an event of an occurrence of the catalyst temperature change Δ***T*** from the current catalyst temperature ***Tc*** from the data memory 44 and determines a NOx conversion efficiency for the specified time ***Δt***, i.e. a mean NOx conversion efficiency ***AvNOx***, for each HC-NOx* ratio. Explaining the determination of mean NOx conversion efficiency ***AvNOx*** for an HC-NOx* ratio of 5 and an HC-NOx* ratio of 3 by way of example, the HC-NOx* ratio of 5 is larger in the increasing rate of reducing substance supply that the HC-NOx* ratio of 3, and, as apparent from Figure 4, the temperature rising rate ***VT*** is higher for the HC-NOx* ratio of 5 than for the HC-NOx* ratio of 3. Accordingly, the temperature change Δ***T*** for the specified time Δ***t*** is greater for the HC-NOx* ratio of 5 than for the HC-NOx* ratio of 3. As shown in Figure 5, when the NOx purifying catalyst 22 is at a temperature ***Tc***1 higher than a peak temperature ***To*** (which is referred to a catalytic temperature at which the NOx purifying catalyst 22 shows a peak NOx conversion efficiency), the catalyst temperature ***Tc*** that is reached after a lapse of the specified time ***Δt*** is ***Tc*5** when the HC-NOx* ratio is 5 and is ***Tc*3**, lower than ***Tc*5**, when the HC-NOx* ratio is 3. Further, the catalyst temperature ***Tc*2** that is reached after a lapse of the specified time Δ***t*** when the HC-NOx* ratio is 2 is more smaller than the catalyst temperature ***Tc*3** that is reached when the HC-NOx* ratio is 3.

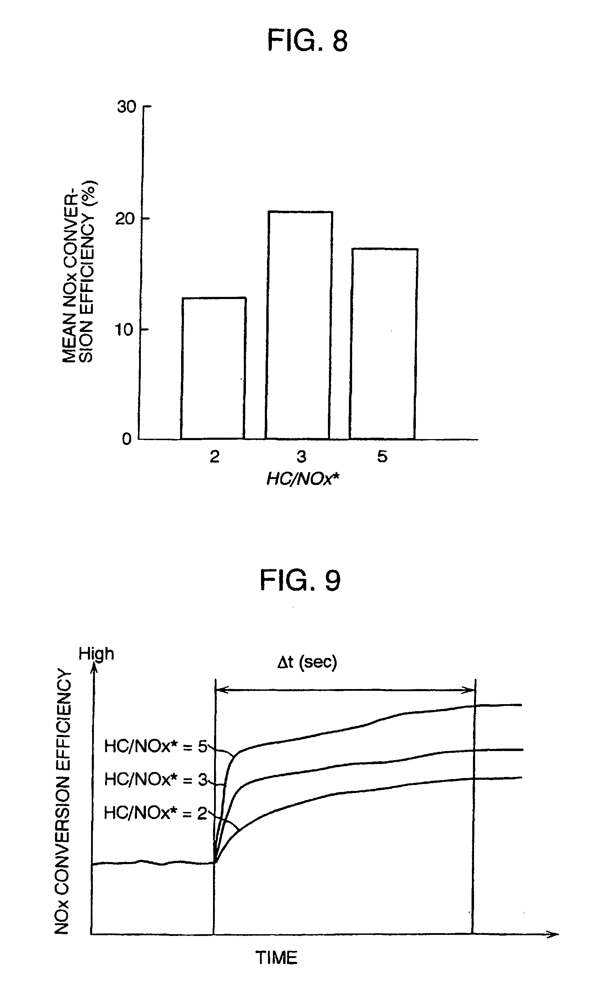

Figure 7 shows a change in NOx conversion efficiency with time that occurs when the NOx purifying catalyst 22 causes a rise in temperature. As shown in Figure 7, when the HC-NOx* ratio is 5, while the extent of a rise in NOx conversion efficiency is significantly large at the beginning of an increase in the amount of reducing substance supply, it drops in an early period after the rise thereof. This is because the temperature change Δ***T*** is large and, in consequence, the catalyst temperature rapidly rises in the specified time Δ***t***. Although the extent of a rise in NOx conversion efficiency accompanying the increase in the amount of reducing substance supply is smaller when the HC-NOx* ratio is 3 than when the HC-NOx* ratio is 5, the extent of a drop in NOx conversion efficiency is comparatively small. This is because the temperature change Δ***T*** is not so large and, in consequence, the catalyst temperature does not rise so high. Further, when the HC-NOx* ratio is 2, the extent of a rise in NOx conversion efficiency accompanying the increase in the amount of reducing substance supply is quite small and the NOx conversion efficiency does not drop so significantly. As a result, as apparent from Figure 8 showing the mean NOx conversion efficiency for the specified time ***Δt***, the mean NOx conversion efficiency is highest when the HC-NOx* ratio is 3.

The HC emission operation means 39 reads in an HC content of exhaust gas according to a HC-NOx* ratio from the data memory 46 and determines the amount of HC emission into the atmosphere for the specified time ***Δt***.

The HC/NOx* selection means 40 selects one of the HC-NOx* ratios at which the NOx purifying catalyst 22 shows the greatest mean NOx conversion efficiency. In this instance, although the selection of HC-NOx* ratio does not turn into a matter of discussion when the catalyst temperature ***Tc*** is higher than the peak temperature To because a greater HC-NOx* ratio is not selected at that catalyst temperature ***Tc***, however, the selection of HC-NOx* ratio is restricted according to the amount of HC emission determined in the HC emission operation means 39. Specifically, as long as the catalyst temperature ***Tc*** is lower than the peak temperature To, while the NOx conversion efficiency becomes larger as the HC-NOx* ratio increases as shown in Figure 9, the HC content becomes larger also as the HC-NOx* ratio increases as shown in Figure 6. Therefore, the HC/NOx* selection means 40 selects the HC-NOx* ratio at which a NOx conversion efficiency greatest within an extent in which the amount of HC emission is not beyond a specified amount is attained.

The NOx amount estimate means 41 reads an amount of NOx generation ***NOx****** according to a current engine speed ***Ne*** and a current accelerator opening from a control map that is electronically stored in the engine control unit (ECU) 35. The control map defines a NOx generation characteristic with respect to changes in engine speed ***Ne*** and accelerator opening that is experimentally determined such that the amount of HC generation basically becomes larger with an increase in engine speed and also with an increase in accelerator opening.

The post fuel injection amount operation means 42 operates an amount of reducing substance supply ***HC*** necessary to provide the HC-NOx* ratio selected in the HC/NOx* selection means 40 on the basis of the HC-NOx* ratio and the amount of NOx generation ***NOx**** determined in the NOx amount estimate means 41 and then determines an amount of post fuel injection ***Qp*** necessary to realize the amount of reducing substance supply ***HC***.

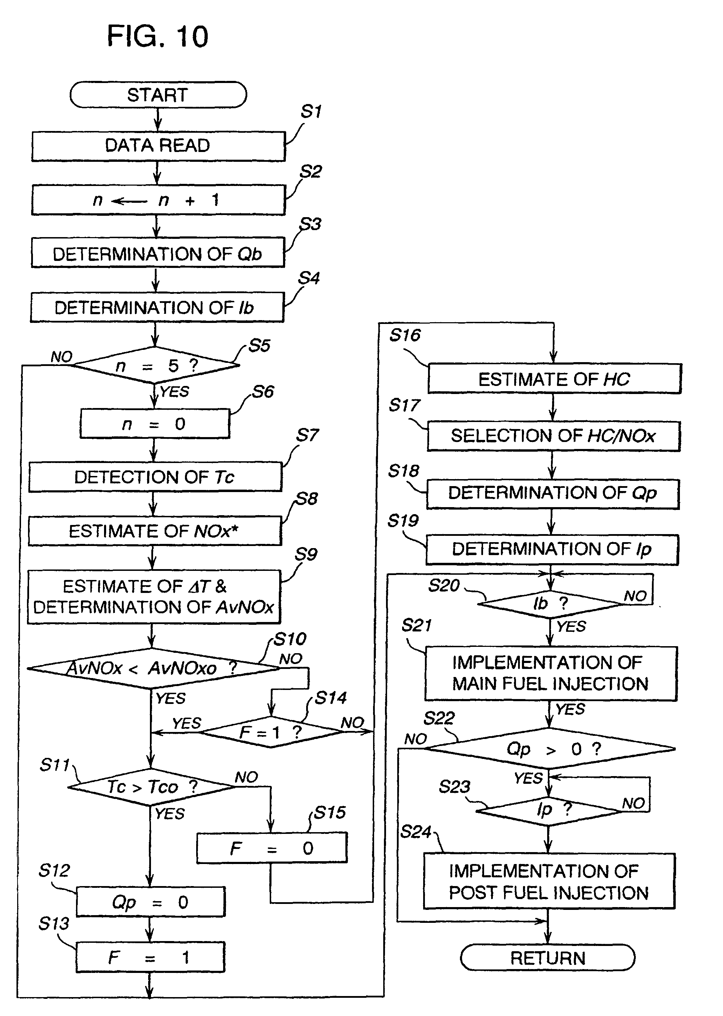

Figure 10 shows a flow chart illustrating a sequence routine of the fuel injection control that runs in synchronism with rotation of the crankshaft 7 by cylinder. When the sequence logic commences and control proceeds to step S1 where the engine control unit (ECU) receives signals representative of various control parameters including at least a crank angle, an amount of fresh intake air, an accelerator opening and a catalyst temperature. Subsequently, the number of times of implementation of the control, i.e. the number of times of main fuel injection that are implemented, is counted at step S2. This is made in order to check implementation of a predetermined number of times, fro example five times, of main fuel injection so as to implement the post fuel injection once every five main fuel injection. At step S3, an amount of main fuel injection ***Qb*** is read out from the fuel injection control map according to the amount of fresh intake air and a target engine torque that is read out from the torque control map according to the accelerator opening and the engine speed. At step S4, a main fuel injection timing It is read out from an injection timing control map according to the engine speed and the target engine torque. The injection timing control map defies injection timing such that the main fuel injection timing It is advanced more greatly as the engine temperature becomes lower and also as the engine speed becomes higher. This is because, although the main fuel injection timing It is basically set at a point near a top dead center of a compression stroke, a time of ignition delay is different according to variations in engine temperature and/or engine speed.

Thereafter, a decision is made at step S5 as to whether the current main fuel injection is fifth. When it is the fifth main fuel injection, after resetting the number of times ***n*** of the main fuel injection to 0 (zero) at step S6, a current catalyst temperature ***Tc*** at step S7. Then, a calculation is made at step S7 to estimate an amount of NOx generation ***NOx**** on the basis of the engine speed ***Ne*** and the accelerator opening. Subsequently, at step S9, after reading in a temperature rising rate ***VT*** according to the current engine speed ***Ne*** for each of HC-NOx* ratios of 1 - 5 and estimating a temperature change Δ***T*** that is possibly caused in the specified time Δ ***t*** when continuing to increase the amount of reducing substance supply at the HC-NOx* ratio according to the temperature rising rate ***VT****,* a mean NOx conversion efficiency ***AvNOx*** in the specified time Δ***t*** for the HC-NOx* ratio is determined on the basis of the catalyst temperature ***Tc*** and the temperature change Δ***T**.*

A decision is made at step S10 as to whether the greatest mean NOx conversion efficiency ***AvNOx*** is lower than a reference mean NOx conversion efficiency ***AvNOxo***. In this instance, the reference mean NOx conversion efficiency ***AvNOxo*** is set to, for example, 10% of the mean NOx conversion efficiency ***AvNOx**.* Directly after the decision made at step S10 when the greatest mean NOx conversion efficiency ***AvNOx*** is lower than the reference mean NOx conversion efficiency ***AvNOxo**,* a decision is made at step S11 as to whether the current catalyst temperature ***Tc*** is higher than a reference catalyst temperature ***Tco*** which is set to, for example, 300°C. This is to say, when the greatest mean NOx conversion efficiency ***AvNOx*** is lower than the reference mean NOx conversion efficiency ***AvNOxo*** and the catalyst temperature ***Tc*** is higher than the reference catalyst temperature ***Tco***, it is not expected because the catalyst temperature ***Tc*** is too high that an increase in the amount of reducing substance supply ***HC*** after the post fuel injection provides desired improvement in the NOx conversion efficiency. In such an event, after setting the amount of post fuel injection ***Qp*** at step S12, a post fuel injection flag ***F*** is set to a state of "1 at step S13. " In this instance, the post fuel injection flag ***F*** indicates suspension of the post fuel injection while it remains in the state of "1" and allows implementation of the post fuel injection while it remains in a state of "0." When the catalyst temperature ***Tc*** is equal to or lower than the reference catalyst temperature ***Tco***, the post fuel injection flag ***F*** is reset to the state of "0" at step S14. Thereafter, the sequence logic proceeds to steps S16 through S24 for implementation of post fuel injection after main fuel injection.

On the other hand, when the greatest mean NOx conversion efficiency ***AvNOx*** is equal to or higher than the reference mean NOx conversion efficiency ***AvNOxo*** at step S10, a decision is made at step S15 as to whether the post fuel injection flag ***F*** is in the state of "1." When the post fuel injection flag ***F*** is in the state of "0," the sequence logic proceeds to the steps S16 through S24 for implementation of post fuel injection after main fuel injection. However, when the post fuel injection flag ***F*** is in the state of "I," then, after taking steps S11 through S13, the sequence logic skips steps S16 through S19 and directly proceeds to steps S20 to S24 so as to implement the post fuel injection without implementing the main fuel injection. That is, in an event where the post fuel injection is suspended once, as long as the catalyst temperature ***Tc*** remains higher than the reference catalyst temperature ***Tco***, the post fuel injection is continuously implemented even when the greatest mean NOx conversion efficiency ***AvNOx*** rises above the reference mean NOx conversion efficiency ***AvNOxo*** so as thereby to force the NOx purifying catalyst 22 to cause a quick drop in catalyst temperature ***Tc***.

At step S16, an estimate is made to find an amount of HC emission in the specified time Δ***t*** for each HC-NOx* ratio on the basis of the data of the amount of HC emission shown in Figure 7 that is retrieved from the data memory 45. Subsequently, at step S17, a selection is made to find such an HC-NOx* ratio as to provide an amount of HC emission in the specified time Δ***t*** below a specified upper limit and to provide the greatest one among mean NOx conversion efficiencies ***AvNOx*** that provide amounts of HC emission in the specified time Δ***t*** below the specified upper limit. A calculation is subsequently made at step S18 to determine an amount of post fuel injection ***Qp*** on the basis of the selected HC-NOx* ratio ***HC*/*NOx**** and the current amount of NOx generation ***NOx****. At step S19, a post fuel injection timing ***Ip*** is determined. The post fuel injection timing ***Ip*** is determined such as to advance more greatly between a crank angle of 30· after top dead center and a crank angle of 90· after top dead center as the engine load becomes higher. When the main fuel injection timing ***Ib*** is reached at step S20, the main fuel injection is implemented at step S21. Subsequently, when the amount of post fuel injection ***Qp*** is larger than 0 (zero) at step S22 and the post fuel injection timing ***Ip*** is reached at step S23, then, the post fuel injection is implemented at step S24. The sequence logic at the final step orders return for another fuel injection control routine.

On the other hand, when the amount of post fuel injection ***Qp*** is equal to 0 (zero) at step S22, the sequence logic orders return for another fuel injection control routine without implementing the post fuel injection through steps S23 and S24.

As described above, according to the present invention, the exhaust gas purifying system, when intending an increase in the amount of reducing substance that is supplied to the NOx purifying catalyst 22 through the post fuel injection, determines an NOx conversion efficiency on the basis of an estimate of a rise in catalyst temperature for a specified time Δ***t*** for each of different increasing rates of reducing substance, namely NC-NOx* ratios and, then, determines an amount of post fuel injection ***Qp*** that can provide the basis of the highest HC-NOx* ratio. This prevents the NOx purifying catalyst 22 from causing an excessive rise in catalyst temperature due to delivery of an excessive amount of fuel through the post fuel injection which leads to a drop in NOx conversion efficiency or from failing in gaining an expected NOx conversion efficiency due to over control of the amount of post fuel injection that is often tried to avoid an excessive rise in catalyst temperature. In other words, the exhaust gas purifying system delivers fuel neither too much nor too little through the post fuel injection and, in consequence, provides the NOx purifying catalyst 22 with a rise in NOx conversion efficiency.

Because there is the restriction that the amount of HC emission does not exceed beyond a specified limit on the selection of HC-NOx* ratio, the exhaust gas purifying system is prevented from rather causing aggravation of emission characteristics due to an increase in HC emission that results from an excessive amount of fuel delivered through the post fuel injection that is tried to provide a rise in NOx conversion efficiency while the NOx purifying catalyst 22 is at a temperature below the peak temperature at which the NOx purifying catalyst 22 shows a peak NOx conversion efficiency. Further, the restriction to the amount of HC emission is effective in preventing the NOx purifying catalyst 22 from causing a sharp rise in temperature beyond the peak temperature.

The restriction on the selection of HC-NOx* ratio may be such that the HC content of an exhaust gas that passes through the NOx purifying catalyst 22 before a lapse of in the specified time Δ***t*** does not exceeds an upper limit. Further, in place of determining a NOx conversion efficiency on the basis of an estimate of a rise in catalyst temperature for a specified time Δ***t***, it may be done to select an appropriate HC-NOx* ratio on the basis of an estimate of an HC-NOx* ratio at a lapse of the specified time Δ***t***.

## Claims

1. An exhaust gas purifying system (100) for an internal combustion engine (1) which has a NOx purifying catalyst (22) disposed in an exhaust line (20) of the engine (1) and operative to reduce and purify NOx in an exhaust gas and reducing substance increasing means for increasing an amount of reducing substance in the exhaust gas that is supplied to the NOx purifying catalyst (22), said NOx purifying catalyst (22) having a catalytic characteristic such as to increase a NOx conversion efficiency with a rise in catalyst temperature to a specific temperature at which the NOx purifying catalyst (22) shows a peak NOx conversion efficiency and to decrease said NOx conversion efficiency with a further rise in catalyst temperature beyond said specific temperature, **characterized in that**:
estimating means (37, 43) estimates a change in a value relating to NOx conversive power of the NOx purifying catalyst (22) at an occurrence of an increase in said amount of reducing substance provided by said reducing substance increasing means when said NOx purifying catalyst is at a temperature beyond said specific temperature and determining means (40, 42) operates an increasing rate of reducing substance supply on the basis of an estimated change in said value relating to NOx conversive power, wherein said reducing substance increasing means increases said amount of reducing substance in the exhaust gas at said increasing rate of reducing substance supply.

2. An exhaust gas purifying system (100) as defined in claim 1, **characterized in that** said estimating means (37, 43) estimates a change in said value relating to NOx conversive power of the NOx purifying catalyst (22) that is caused before a lapse of a specified time from said occurrence of an increase in said amount of reducing substance and said determining means (40, 42) operates a NOx conversion efficiency in said specified time on the basis of an estimated change in said value relating to NOx conversive power and determines said increasing rate of reducing substance supply on the basis of said NOx conversion efficiency.

3. An exhaust gas purifying system (100) as defined in claim 2, **characterized in that** said estimating means (37, 43) estimates changes in said value relating to NOx conversive power of the NOx purifying catalyst (22) one for each of a plurality of said increasing rates of reducing substance, and said determining means (40, 42) determines a NOx conversion efficiency in said specified time for each said increasing rate of reducing substance supply on the basis of an estimated change in said value relating to NOx conversive power and selects one of said increasing rates of reducing substance that provides a larger NOx conversion efficiency as said increasing rate of reducing substance supply at which said reducing substance increasing means increases said amount of reducing substance in the exhaust gas.

4. An exhaust gas purifying system (100) as defined in claim 3, **characterized in that** said value relating to NOx conversive power is a temperature of said NOx purifying catalyst (22).

5. An exhaust gas purifying system (100) as defined in claim 4, **characterized in that** said estimating means (37, 43) has data of a change in said rising rate of catalyst temperature of said NOx purifying catalyst (22) with respect to said increasing rate of reducing substance supply upon an occurrence of an increase in said amount of reducing substance provided by said reducing substance increasing means at said increasing rate of reducing substance supply, which is electronically stored, and estimates a rise in catalyst temperature of the NOx purifying catalyst (22) in said specified time for each of a plurality of said different increasing rates of reducing substance on the basis of said data
said determining means (40, 42) has data of a change in said NOx conversive power of said NOx purifying catalyst (22) with respect to said increasing rate of reducing substance supply, which is electronically stored, operating means (38) for operating said NOx conversion efficiency in said specified time for each said increasing rate of reducing substance supply upon an occurrence of said estimated rise in catalyst temperature of the NOx purifying catalyst (22) and selecting means (40) for selecting one of said increasing rates of reducing substance that provides a largest NOx conversion efficiency as said increasing rate of reducing substance supply at which said reducing substance increasing means increases said amount of reducing substance in the exhaust gas.

## Patentansprüche

1. Abgasreinigungsanlage (100) für einen Verbrennungsmotor (1), welche einen in einer Abgasleitung (20) des Motors (1) angeordneten und zur Reduzierung und Reinigung von NOx in Abgas dienenden NOx-Reinigungskatalysator (22) sowie ein Reduktant-Steigerungsmittel für das Steigern einer Reduktantmenge in dem Abgas, das dem NOx-Reinigungskatalysator (22) zugeführt wird, aufweist, wobei der NOx-Reinigungskatalysator (22) eine katalytische Eigenschaft besitzt, wie zum Beispiel das Steigern des Wirkungsgrads einer NOx-Umwandlung bei Anstieg der Katalysatortemperatur auf eine bestimmte Temperatur, bei welcher der NOx-Reinigungskatalysator (22) einen Spitzenwirkungsgrad der NOx-Umwandlung zeigt, und das Senken des Wirkungsgrads der NOx-Umwandlung bei einem weiteren Anstieg der Katalysatortemperatur über die bestimmte Temperatur hinaus, **dadurch gekennzeichnet, dass**:
ein Schätzmittel (37, 43) eine Wertänderung bezüglich der NOx-Umwandlungsleistung des NOx-Reinigungskatatysators (22) bei Eintreten einer Reduktantmengensteigerung, welche von dem Reduktant-Steigerungsmittel vorgesehen wird, wenn der NOx-Reinigungskatalysator eine Temperatur über der bestimmten Temperatur hat, schätzt und ein Ermittlungsmittel (40, 42) anhand einer geschätzten Wertänderung bezüglich der NOx-Umwandlungsleistung eine Steigerungsrate der Reduktantzufuhr bewirkt, wobei das Reduktantsteigerungsmittel die Reduktantmenge in dem Abgas bei der Steigerungsrate der Reduktantzufuhr erhöht.

2. Abgasreinigungsanlage (100) nach Anspruch 1, **dadurch gekennzeichnet, dass** das Schätzmittel (37, 43) eine Wertänderung bezüglich der NOx-Umwandlungsleistung des NOx-Reinigungskatalysators (22) schätzt, die vor Verstreichen einer bestimmten Zeit ab Eintreten einer Reduktantmengensteigerung bewirkt wird, und das Ermittlungsmittel (40, 42) anhand einer geschätzten Wertänderung bezüglich der NOx-Umwandlungsleistung einen NOx-Umwandlungswirkungsgrad in der bestimmten Zeit bewirkt und die Steigerungsrate der Reduktantzufuhr anhand des NOx-Umwandlungswirkungsgrads ermittelt.

3. Abgasreinigungsanlage (100) nach Anspruch 2, **dadurch gekennzeichnet, dass** das Schätzmittel (37, 43) Wertänderungen bezüglich der NOx-Umwandlungsleistung des NOx-Reinigungskatalysators (22) jeweils für jede von mehreren Steigerungsraten des Reduktants schätzt, und das Ermittlungsmittel (40, 42) anhand einer geschätzten Wertänderung bezüglich der NOx-Umwandlungsleistung einen NOx-Umwandlungswirkungsgrad für jede Steigerungsrate der Reduktantzufuhr in der bestimmten Zeit ermittelt und eine der Steigerungsraten des Reduktants wählt, die einen größeren NOx-Umwandlungswirkungsgrad bietet als die Steigerungsrate der Reduktantzufuhr, bei welcher das Reduktantsteigerungsmittel die Reduktantmenge in dem Abgas steigert.

4. Abgasreinigungsanlage (100) nach Anspruch 3, **dadurch gekennzeichnet, dass** der Wert bezüglich der NOx-Umwandlungsleistung eine Temperatur des NOx-Reinigungskatalysators (22) ist.

5. Abgasreinigungsanlage (100) nach Anspruch 4, **dadurch gekennzeichnet, dass** das Schätzmittel (37, 43) über Daten einer Änderung der Anstiegsrate der Katalysatortemperatur des NOx-Reinigungskatalysators (22) bezüglich der Steigerungsrate der Reduktantzufuhr bei Eintreten einer Reduktantmengensteigerung, welche von dem Reduktantsteigerungsmittel bei der Steigerungsrate der Reduktantzufuhr vorgesehen wird, verfügt, welche elektronisch gespeichert werden, und anhand dieser Daten einen Anstieg der Katalysatortemperatur des NOx-Reinigungskatalysators (22) in der bestimmten Zeit für jede von mehreren unterschiedlichen Steigerungsraten des Reduktants schätzt,
das Ermittlungsmittel (40, 42) über Daten einer Änderung der NOx-Umwandlungsleistung des NOx-Reinigungskatalysators (22) bezüglich der Steigerungsrate der Reduktantzufuhr, welche elektronisch gespeichert werden, Steuermittel (38) für das Steuern des NOx-Umwandlungswirkungsgrads in der bestimmten Zeit für jede der Steigerungsraten der Reduktantzufuhr bei Eintreten des geschätzten Anstiegs der Katalysatortemperatur des NOx-Reinigungskatalysators (22) und Wahlmittel (40) für das Wählen einer der Steigerungsraten des Reduktants, welche den größten NOx-Umwandlungswirkungsgrad als Steigerungsrate der Reduktantzufuhr bietet, bei welcher das Reduktantsteigerungsmittel die Reduktantmenge in dem Abgas steigert, verfügt.

## Revendications

1. Système de purification (100) des gaz d'échappement pour un moteur à combustion interne (1) qui comporte un catalyseur (22) de purification des oxydes d'azote disposé dans un conduit d'échappement (20) du moteur (1) et fonctionnant pour réduire et purifier les oxydes d'azote dans les gaz d'échappement et un moyen d'augmentation de la substance réductrice pour augmenter une quantité de substance réductrice dans les gaz d'échappement qui sont fournis au catalyseur (22) de purification des oxydes d'azote, ledit catalyseur de purification (22) des oxydes d'azote ayant une caractéristique catalytique de manière à augmenter une efficacité de conversion des oxydes d'azote lors d'une augmentation de la température du catalyseur à une température spécifique à laquelle le catalyseur de purification (22) des oxydes d'azote présente une efficacité de conversion crête des oxydes d'azote, et pour diminuer l'efficacité de conversion des oxydes d'azote lors d'une augmentation plus forte de la température du catalyseur au-delà de ladite température spécifique, **caractérisé en ce que**:
un moyen d'estimation (37, 43) estime un changement d'une valeur se rapportant à la puissance de conversion des oxydes d'azote du catalyseur de purification (22) des oxydes d'azote lors de la survenue d'une augmentation de ladite quantité de substance réductrice, réalisé par ledit moyen d'augmentation de la substance réductrice, lorsque ledit catalyseur de purification des oxydes d'azote est à une température au-delà de ladite température spécifique, et un moyen de détermination (40, 42) détermine un taux d'augmentation de l'amenée de la substance réductrice sur la base d'un changement estimé de ladite valeur se rapportant à la puissance de conversion des oxydes d'azote, lorsque ledit moyen d'augmentation de la substance réductrice augmente ladite quantité de substance réductrice dans les gaz d'échappement audit taux d'augmentation de l'amenée de la substance réductrice.

2. Système de purification des gaz d'échappement (100) selon la revendication 1, **caractérisé en ce que** ledit moyen d'estimation (37, 43) estime un changement de ladite valeur se rapportant à la puissance de conversion des oxydes d'azote du catalyseur de purificateur (22) des oxydes d'azote qui est produit avant l'écoulement d'un temps spécifié à partir de ladite survenue d'une augmentation de ladite quantité de substance réductrice, et ledit moyen de détermination (40, 42) détermine une efficacité de conversion des oxydes d'azote pendant ledit temps spécifié sur la base d'un changement estimé de ladite valeur se rapportant à la puissance de conversion des oxydes d'azote et détermine ledit taux d'augmentation de l'amenée de la substance réductrice sur la base de ladite efficacité de conversion des oxydes d'azote.

3. Système de purification des gaz d'échappement (100) selon la revendication 2, **caractérisé en ce que** ledit moyen d'estimation (37, 43) estime des changements de ladite valeur se rapportant à la puissance de conversion des oxydes d'azote du catalyseur de purification (22) des oxydes d'azote, un pour chacun de plusieurs taux d'augmentation précités de la substance réductrice, et ledit moyen de détermination (40, 42) détermine une efficacité de conversion des oxydes d'azote pendant ledit temps spécifié pour chaque taux d'augmentation de l'amenée de la substance réductrice sur la base d'un changement estimé de ladite valeur se rapportant à la puissance de conversion des oxydes d'azote et sélectionne l'un des taux d'augmentation précités de la substance réductrice qui fournit une plus grande efficacité de conversion des oxydes d'azote que ledit taux d'augmentation de l'amenée de substance réductrice auquel ledit moyen d'augmentation de la substance réductrice fait augmenter ladite quantité de substance réductrice dans les gaz d'échappement.

4. Système de purification (100) des gaz d'échappement selon la revendication 3, **caractérisé en ce que** ladite valeur se rapportant à la puissance de conversion des oxydes d'azote est une température dudit catalyseur de purification (22) des oxydes d'azote.

5. Système de purification (100) des gaz d'échappement selon la revendication 4, **caractérisé en ce que** ledit moyen d'estimation (37, 43) possède des données d'un changement dudit taux d'augmentation de la température du catalyseur de purification (22) des oxydes d'azote par rapport audit taux d'augmentation de l'amenée de la substance réductrice lors de la survenue d'une augmentation de ladite quantité de substance réductrice fournie par ledit moyen d'augmentation de la substance réductrice audit taux d'augmentation de l'amenée de la substance réductrice, qui sont stockées électroniquement, et estime une augmentation de la température du catalyseur de purification (22) des oxydes d'azote pendant ledit temps spécifié pour chacun de plusieurs taux d'augmentation différents précités de la substance réductrice sur la base desdites données,
ledit moyen de détermination (40, 42) présente des données d'un changement de ladite puissance de conversion des oxydes d'azote dudit catalyseur de purification (22) des oxydes d'azote par rapport audit taux d'augmentation de l'amenée de la substance réductrice, qui sont stockées électroniquement, un moyen fonctionnel (38) pour produire l'efficacité de conversion des oxydes d'azote pendant ledit temps spécifié pour chaque taux d'augmentation précité de l'amenée de la substance réductrice lors d'une survenue de l'augmentation estimée de la température du catalyseur de purification (22) des oxydes d'azote, et un moyen de sélection (40) pour sélectionner l'un des taux d'augmentation précités de la substance réductrice qui produit la plus grande efficacité de conversion des oxydes d'azote comme taux d'augmentation de l'amenée de la substance réductrice auquel ledit moyen d'augmentation de la substance réductrice augmente ladite quantité de substance réductrice dans les gaz d'échappement.
